# EUROPEAN PATENT SPECIFICATION

(11) **EP 4 092 315 B1**
(45) Date of publication and mention of the grant of the patent: **17.12.2025**
(21) Application number: 21740772.5
(22) Date of filing: 15.01.2021
(51) Int. Cl.: B64D 47/08, G06Q 10/20, G06Q 50/06, B64C 39/02, G01J 5/48, G06Q 10/063, F17D 5/02, B64U 101/30, B64U 101/31

(54) **SYSTEM AND METHOD FOR INSPECTING STABILITY OF HEAT TRANSFER PIPE BY USING DRONE**
SYSTEM UND VERFAHREN ZUR PRÜFUNG DER STABILITÄT EINES WÄRMEÜBERTRAGUNGSROHRES UNTER VERWENDUNG EINER DROHNE
SYSTÈME ET PROCÉDÉ D'INSPECTION DE LA STABILITÉ D'UN TUYAU DE TRANSFERT DE CHALEUR À L'AIDE D'UN DRONE

(30) Priority: 16.01.2020 KR 20200005712
(43) Date of publication of application: 23.11.2022
(73) Proprietor: Seongnam City Hall, Seongnam-si, Gyeonggi-do 13437 (KR)
(72) Inventor: KIM, Ki Han, Seongnam-si, Gyeonggi-do 13482 (KR)
(74) Representative: Ter Meer Steinmeister & Partner
(86) International application number: PCT/KR2021/000585
(87) International publication number: WO 2021/145719

(56) References cited:
- CN-A- 109 506 132
- JP-A- 2017 504 875
- KR-A- 20180 036 299
- KR-A- 20180 135 827
- KR-B1- 101 800 232
- US-A1- 2018 004 207
- US-A1- 2018 004 231
- BESADA JUAN ET AL: "Drone Mission Definition and Implementation for Automated Infrastructure Inspection Using Airborne Sensors", SENSORS, vol. 18, no. 4, 11 April 2018 (2018-04-11), pages 1170, XP055915765, DOI: 10.3390/s18041170
- WAINNER RICHARD T ET AL: "High Altitude Aerial Natural Gas Leak Detection System", USDOE, 31 December 2006 (2006-12-31), XP093109845, Retrieved from the Internet <URL:https://dx.doi.org/10.2172/921001> [retrieved on 20231207], DOI: 10.2172/921001
- JIN, JONG SOO: "Yonnam City First In The Country Makes 'Heat Map' By Using Drone", 15 August 2019 (2019-08-15), pages 1 - 2, XP009529315, Retrieved from the Internet <URL:http://www.kgmaeil.net/news/articleView.html?idxno=218662>

## Description

### [Technical Field]

The present invention relates to a system and method for inspecting the stability of a heat transfer pipe using a drone.

### [Background Art]

A heat transfer facility means a device for transferring or distributing water, vapor and other thermal media and its accessories including a heat transfer pipe (except for the pipes in a heat source facility and a consumption facility), a circulation pump, and other equipment related to heat transfer and distribution. The heat transfer pipe means a pipe for transferring heat from a heat production facility to a heat consumption facility.

The heat transfer pipe is embedded under the ground, which is aged when long time passes. Although there are many aged heat transfer pipes, heat transfer pipes are inspected one by one through walking or vehicles. Accordingly, a more accurate and efficient method for inspecting the stability of heat transfer pipes is required.

CN 109 506 132 A discloses a heat distribution pipeline detection system based on visible light and infrared thermal imaging. A double-vision infrared thermal imager, a 3D autostable pan and tilt head and a high-definition network transmission radio station are mounted on a three-positioning six-rotor unmanned aerial vehicle, the three-positioning six-rotor unmanned aerial vehicle provides power for the double-vision infrared thermal imager, the 3D autostable pan and tilt head and the high-definition network transmission radio station, high-precision positioning can be achieved, flight routes can be planned, and flying tracks can be stored; a mobile portable computer provides an operation environment for a control system, a GIS geographic system and a cloud live system; the 3D autostable pan and tilt head is connected with the control system, the double-vision infrared thermal imager is correspondingly connected with the control system, the GIS geographic system and a diagnosis server, the diagnosis server is further connected with the GIS geographic system, the high-definition network transmission radio station and the cloud live system, and the high-definition network transmission radio station is connected with the cloud live system. According to the heat distribution pipeline detection system based on visible light and infrared thermal imaging, the leakage of a heat distribution pipeline can be efficiently and accurately detected, a historical file is established for inspection of the pipeline, and a data basis is provided for overhauling.

US 2018/004231 A1 discloses a UAV flight system which can dynamically adjust UAV flight operations based on thermal sensor data. For example, the flight system can determine an initial flight plan for inspecting a flare stack and can configure a UAV to perform an aerial inspection of the flare stack. Once airborne, the UAV can collect thermal sensor data and the flight system can automatically adjust the flight plan to avoid thermal damage to the UAV based on the thermal sensor data.

US 2018/004207 A1 discloses a UAV flight system which can dynamically adjust UAV flight operations based on radio frequency (RF) signal data. For example, the flight system can determine an initial flight plan for inspecting a RF transmitter and configure a UAV to perform an aerial inspection of the RF transmitter. Once airborne, the UAV can collect RF signal data and the flight system can automatically adjust the flight plan to avoid RF signal interference and/or damage to the UAV based on the collected RF signal data. In some implementations, the UAV can collect RF signal data and generate a three-dimensional received signal strength map that describes the received signal strength at various locations within a volumetric area around the RF transmitter. In some implementations, the UAV can collect RF signal data and determine whether a RF signal transmitter is properly aligned.

### [Disclosure]

### [Technical Problem]

The present invention provides a system and method for inspecting the stability of a heat transfer pipe using a drone.

The present invention provides a system and method that efficiently inspects the stability of a heat transfer pipe using a drone.

### [Technical Solution]

A system according to an embodiment of the present invention is a system for inspecting the stability of a heat transfer pipe using a drone, the system including: a drone including a Global Positioning System (GPS) module and a thermal imaging camera generating a heat map by capturing an image of the heat transfer pipe; and a control unit receiving information on a rupture location in the heat transfer pipe from the drone, identifying the rupture location in the heat transfer pipe, and controlling flight of the drone, in which the drone is configured to load the heat map onto a Geographic Information System (GIS), to compare the heat map with an initial heat transfer pipe, and to generate and transmit information on the rupture location in the heat transfer pipe when the heat map does not match the initial heat transfer pipe.

A method according to an embodiment of the present invention is a method for inspecting the stability of a heat transfer pipe using a drone, the method including the processes of: generating and storing a heat map through a thermal imaging camera; loading the heat map onto a Geographic Information System (GIS); comparing the heat map with an initial heat transfer pipe; and generating and transmitting information on the rupture location in the heat transfer pipe when the heat map does not match the initial heat transfer pipe.

A device according to an embodiment of the present invention is a device for inspecting the stability of a heat transfer pipe using a drone, the device including: a Global Positioning System (GPS) module generating position information of the drone; a controller performing control to generate and store a heat map through a thermal imaging camera, load the heat map onto a Geographic Information System (GIS), compare the heat map with an initial heat transfer pipe, and generate information on the rupture location in the heat transfer pipe when the heat map does not match the initial heat transfer pipe; and a communication unit transmitting information on the rupture location in the heat transfer pipe.

### [Advantageous Effects]

The present invention can quickly inspect heat transfer pipes in a wide area.

The present invention can prevent the omission due to a wide angle of view and can resolve a non-accessible area.

The present invention can inspect abnormal symptoms at places where heat is generated under the ground such as heat transfer pipes through a non-destructive inspection (remote sensing) method and can serve to keep underground facilities safe.

The present invention can ensure flight efficiency and accuracy compared to the existing heat transfer pipe inspection methods.

The present invention can manage a burst position in time series by layering a heat map on a heat transfer pipe in a GIS system and can derive clear analysis data of comparison with a normal-state heat map.

The present invention can expand capacity by innovatively changing a working type through an efficient inspection structure.

The present invention can overcome spatial limitation in comparison to the existing inspections by foot or vehicle.

### [BRIEF DESCRIPTION OF THE DRAWINGS]

FIG. 1 is a structural view of a system for inspecting the stability of a heat transfer pipe using a drone according to an embodiment of the present invention;
FIG. 2 is a flowchart showing a method for inspecting the stability of a heat transfer pipe using a drone according to an embodiment of the present invention;
FIG. 3 is a flowchart showing a method for inspecting the stability of a heat transfer pipe using a drone according to a first embodiment of the present invention;
FIG. 4 is a flowchart showing a method for inspecting the stability of a heat transfer pipe using a drone according to a second embodiment of the present invention;
FIG. 5 is a flowchart showing a method for inspecting the stability of a heat transfer pipe using a drone according to a third embodiment of the present invention;
FIG. 6A is an exemplary view showing a heat transfer pipe that does not rupture in the stability testing of a heat transfer pipe using a drone according to an embodiment of the present invention;
FIG. 6B is an exemplary view showing a heat transfer pipe that ruptures in the stability testing of a heat transfer pipe using a drone according to an embodiment of the present invention;
FIG. 7 is a configuration view of a drone according to an embodiment of the present invention; and
FIG. 8 is a configuration view of a ground control system according to an embodiment of the present invention.

### [Best Mode]

The invention is defined by appended claims 1-15. Hereafter, various embodiments of the present invention are described with reference to accompanying drawings. However, this is not intended to limit the technology described in the present invention to specific embodiments and should be construed as including various modifications, equivalents, and/or alternatives of the embodiments of the present invention. In the description of drawings, similar components may be given similar reference numerals.

In the specification, expressions such as "have", "may have", "include", or "may include" indicate existence of corresponding characteristics (e.g. a number, a function, an operation, or a component such as a part) without excluding existence of additional characteristics.

In the specification, the terms "A or B", "at least one of A and/or B", or "one or more of A, B and/or C" may include all possible combinations of items to be enumerated. For example, "A or B", "at least one of A and B", or "at least one of A or B" may indicate all of a case (1) including at least one A, a case (2) including at least one B, or a case (3) including both of at least one A and at least one B.

The terms such as "first" and "second" used in various embodiments may modify various components regardless of the order and/or priority and are used only to discriminate one component from another component without limiting the components. For example, a first user device and a second user device may refer to different user devices regardless of the sequence or priority. For example, the first component may be named the second component, and vice versa, without departing from the scope of the present invention, that is defined by the appended claims 1-15.

When a component (e.g. a first component) is ("operatively or communicatively) coupled with/to or connected to another component (e.g. a second component), it should be understood that the component may be connected to the another component directly or through another component (e.g. a third component). However, when a component (e.g. a first component) is "directly coupled to" or "directly connected" to another component (e.g. a second component), it may be understood as other component (e.g. a third component) may exist between the component and the another component.

The terms used herein "configured to" may be replaced, for example, with "suitable for", "having the capacity to", "designed to", "adapted to", "made to", or "capable of", depending on circumstances. The term "configured to" may not refer only "specifically designed to" in term of hardware. Instead, in some circumferences, the term "device configured to" may refer to that the device "is capable of doing" with other devices or parts. For example, a "processor configured to perform expressions A, B, and C" may refer to an exclusive processor (e.g. an embedded processor) for performing the corresponding operations or a generic-purpose processor (e.g. a CPU or an AP (application processor)) being capable of performing the corresponding operations by executing one or more software programs stored in a memory device.

Terminologies used herein may be used only to describe specific embodiments without intention of limiting the range of other embodiments. Singular forms are intended to include plural forms unless the context clearly indicates otherwise. All terminologies used herein including technological or scientific terminologies may have the same meanings that are generally understood by those skilled in the art. Terminologies defined in general dictionaries of the terminologies used herein may be understood as having meanings the same as or similar to the meanings in the contexts and should not be construed as abnormally or exclusively formally meanings unless specifically defined herein. Depending on cases, even if terminologies defined herein, they should not be construed as excluding the embodiments of the present invention.

A 'heat map' to be described herein may mean a map displaying data, such as temperature, the amount of heat, etc., obtained at places where heat is generated (supplied) or consumed (used), based on a Geographic Information System (GIS).

A 'drone' described herein may be referred to as a 'wireless flight device'. An embodiment of the present invention may be applied to a drone equipped with a thermal imaging camera.

A heat transfer pipe and a heat transfer pipeline to be described herein may be used in the same meaning.

Hereafter, preferred embodiments of the present invention are described in detail with reference to the accompanying drawings.

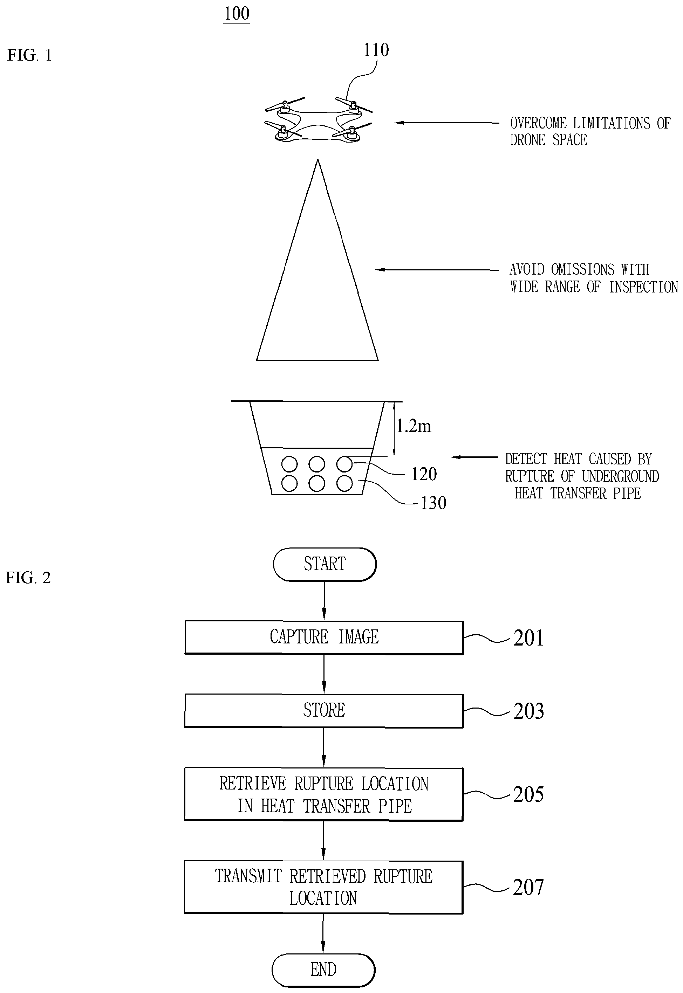

FIG. 1 is a structural view of a system for inspecting the stability of a heat transfer pipe using a drone according to an embodiment of the present invention.

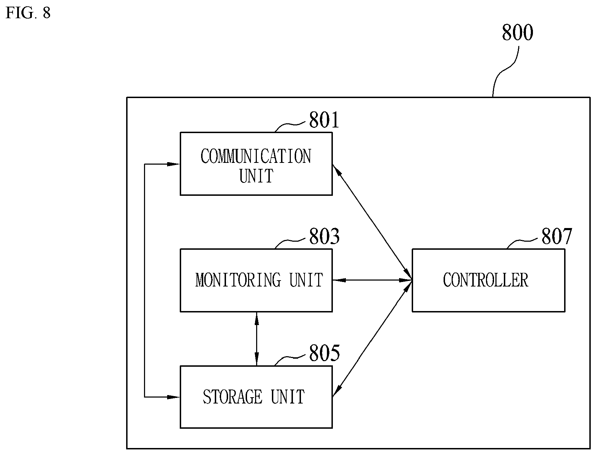

A system for inspecting the stability of a heat transfer pipe using a drone 100 according to an embodiment of the present invention includes a drone 110, a heat transfer pipe 120, sand 130, a Ground Control System (GCS) not shown in the figures, etc. The ground control system will be described with reference to FIG. 8.

The drone 110 may include an unmanned flying object that is automatically controlled by an autopilot or a ground control system or is remotely controlled through wireless communication. The drone 110 is equipped with a Global Positioning System (GPS) module and a thermal imaging camera that generates a heat map by imaging the heat transfer pipe. The drone may be equipped with a plurality of thermal imaging cameras. The thermal imaging camera can remotely monitor and measure temperature in real time and can store and output a heat map.

The drone 110 captures images of the heat transfer pipe 120 under the ground at a long distance or short distance through a nondestructive testing (or remote sensing) inspection using the thermal imaging camera, and transmits the captured thermal image or video to the ground control system through wireless communication. Accordingly, an inspector at the ground control system can safely and efficiently identify the stability of underground structures.

The heat transfer pipe 120 is embedded under the ground and may include a device for transferring or distributing vapor and other heat media. The distance between the ground surface and the heat transfer pipe 120, for example, may be 1.2m.

The sand 130 covers the entire heat transfer pipe 120.

The ground control system may refer to a control unit, and means programs and devices that allow the identification and control of the matters related to the drone 110 in flight. The ground control system not only can control autonomous flight of the drone 110, but also can identify and process data obtained by the drone 110.

In particular, the ground control system according to an embodiment of the present invention receives the information on the rupture location in the heat transfer pipe from the drone 110, thereby identifying the rupture location in the heat transfer pipe.

FIG. 2 is a flowchart showing a method for inspecting the stability of a heat transfer pipe using a drone according to an embodiment of the present invention.

The drone, in step 201, captures an image, a video, or a thermal image of a heat transfer pipe.

The drone, in step 203, stores the captured image, video, or thermal image into a storage unit of the drone.

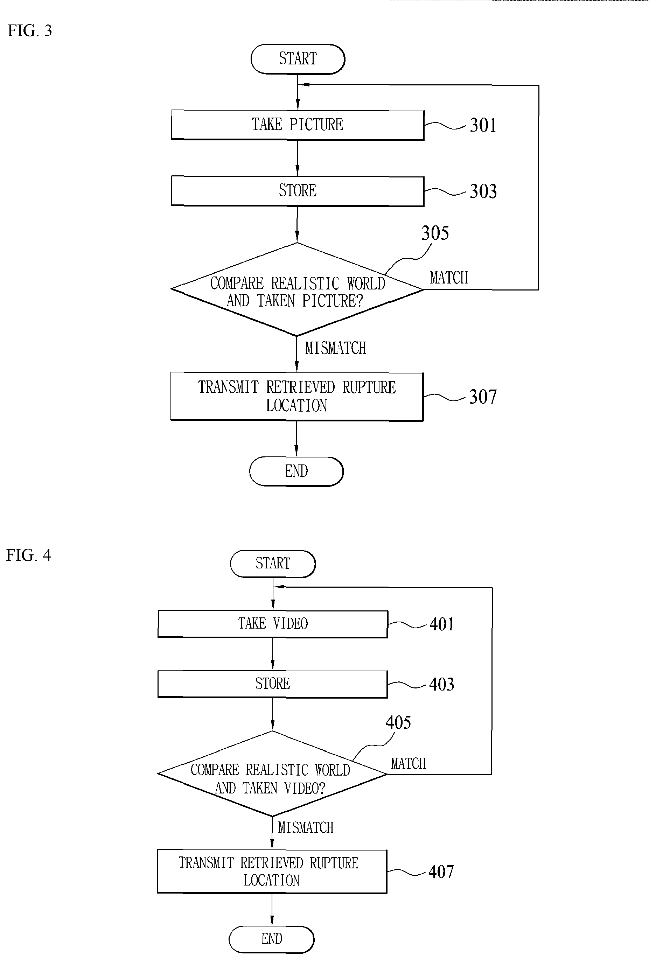

The drone, in step 205, retrieves the rupture location in the heat transfer pipe. The method of retrieving the rupture location in a heat transfer pipe may be described as three embodiments. The method of retrieving the rupture location in the heat transfer pipe will be described with reference to FIGS. 3 to 5.

The drone, in step 207, transmits the retrieved rupture location to the ground control system.

FIG. 3 is a flowchart showing a method for inspecting the stability of a heat transfer pipe using a drone according to a first embodiment of the present invention.

The drone, in step 301, takes pictures of a heat transfer pipe.

The drone, in step 303, stores the taken pictures to the storage unit.

The drone, in step 305, compares a realistic world and the taken pictures.

When the realistic world and the taken pictures are the same as the result of comparison, the drone returns to step 301. When the realistic world and the taken pictures are the same, the drone determines that there is no abnormal symptom in the heat transfer pipe. The realistic world herein means the picture of a heat transfer pipe in a normal state without an abnormal symptom. Abnormal symptoms at places where heat is generated under the ground such as a heat transfer pipe can be inspected, for example, through a nondestructive testing (remote sensing) method.

When the realistic world and the taken picture are not the same, the drone determines in step 307 that the heat transfer pipe has rupture, and transmits the rupture location in the heat transfer pipe to the ground control system.

FIG. 4 is a flowchart showing a method for inspecting the stability of a heat transfer pipe using a drone according to a second embodiment of the present invention.

The drone, in step 401, takes a video of a heat transfer pipe.

The drone, in step 403, stores the taken video into the storage unit.

The drone, in step 405, compares a realistic video and the taken video.

When the realistic video and the taken video are the same, the drone returns to step 401. When the realistic video and the taken video are the same, the drone determines that there is no abnormal symptom in the heat transfer pipe. The realistic video herein means a video of a heat transfer pipe in a normal state without an abnormal symptom.

When the realistic video and the taken video do not match, the drone determines in step 407 that the heat transfer pipe has rupture, and transmits the rupture location in the heat transfer pipe to the ground control system.

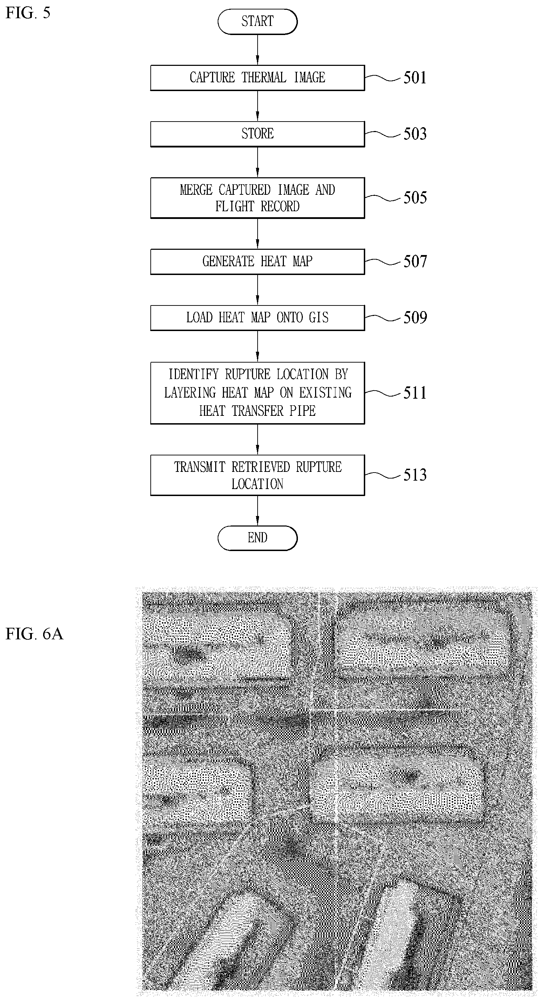

FIG. 5 is a flowchart showing a method for inspecting the stability of a heat transfer pipe using a drone according to a third embodiment of the present invention.

The drone, in step 501, captures images of a thermal image of a heat transfer pipe.

The drone, in step 503, stores the captured thermal image into the storage unit.

The drone, in step 505, merges the captured thermal image and a flight record.

The drone, in step 507, generates a heat map on the basis of the merging result in step 505. The heat map (or an aerial picture or a digital map) can show one complete heat distribution by merging images including coordinates.

An embodiment of the present invention can manage a bust position in time series by layering a heat map on a heat transfer pipe in a GIS system and can derive clear analysis data of comparison with a normal-state heat map.

The drone, in step 509, loads the generated heat map onto the GIS system through a predetermined coordinate system.

The drone, in step 511, can accurately identify the rupture location in the heat transfer pipe in X and Y coordinates by layering the heat map on the existing heat transfer pipe.

The drone, in step 513, transmits the rupture location in the heat transfer pipe to the ground control system.

It is apparent that an embodiment of the present invention builds a database (DB) of the history of inspection, management and repair of a heat transfer pipe and compares average data (average data related to the heat transfer pipe) stored in the database with data on the rupture location in the heat transfer pipe, thereby identifying the degree of rupture in the heat transfer pipe and the position coordinates with high accuracy, from which an abnormal symptom can be found. It is apparent that an embodiment of the present invention can identify a rupture location in a heat transfer pipe using a big data technology and an artificial intelligence technology.

FIG. 6A is an exemplary view showing a heat transfer pipe that does not rupture in the stability testing of a heat transfer pipe using a drone according to an embodiment of the present invention.

A heat transfer pipeline, as indicated by reference numeral 610, is indicated by a white line. The heat transfer pipe shown in FIG. 6A does not rupture, which can be identified on the display of the ground control system.

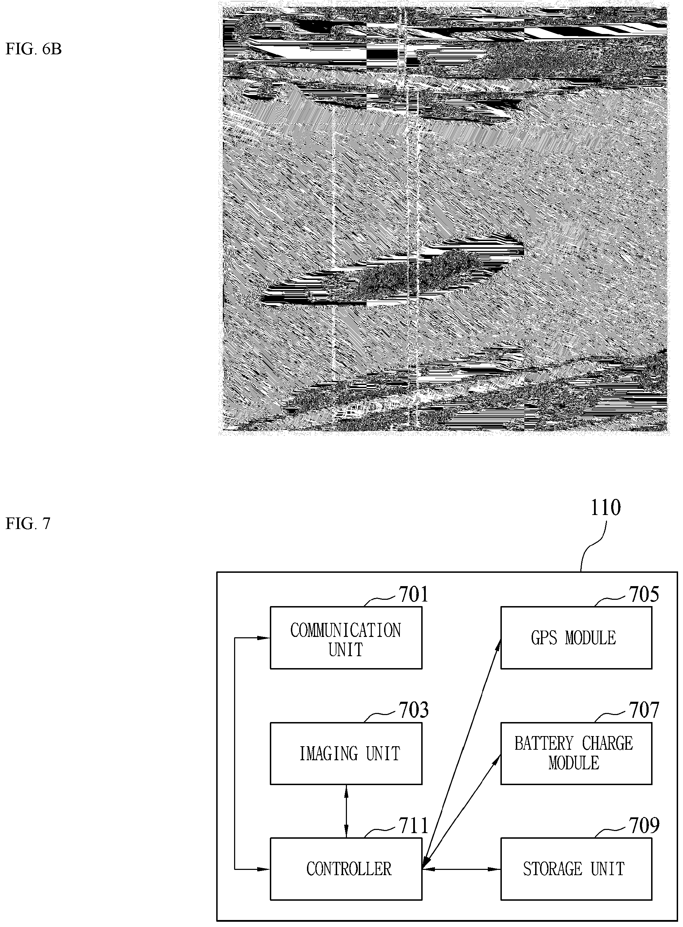

FIG. 6B is an exemplary view showing a heat transfer pipe that ruptures in the stability testing of a heat transfer pipe using a drone according to an embodiment of the present invention.

A heat transfer pipeline, as indicated by reference numeral 620, is indicated by a white line. A rupture location in the heat transfer pipe, as indicated by reference numeral 630, is indicated by black color, which can be identified on the display of the ground control system.

FIG. 7 is a configuration view of a ground control system according to an embodiment of the present invention.

The drone 110 may include a communication unit 701, an imaging unit 703, a GPS module 705, a battery charge module 707, and a controller 709.

The communication unit 701 can communicate with a ground control system 800 through Long Term Evolution (LTE) communication or 5th Generation (5G) communication, and can transmit a rupture location in a heat transfer pipeline to the ground control system 800.

The imaging unit 703 can capture an image, a video, or a thermal image. The imaging unit 703 may further include a thermal imaging camera other than a common camera.

The GPS module 705 can generate and transmit the information on the location of the drone 110 to the ground control system 800 through the communication unit 701.

The battery module 707 can charge a battery of the drone 110.

The controller 709 automatically controls the communication unit 701, the imaging unit 703, the GPS module 705, and the battery charge module 707.

The controller 709 merges a thermal image captured by the drone and a flight record, generates a heat map on the basis of the merged result, loads the generated heat map onto the GIS system through a predetermined coordinate system, and layers the heat map on the existing heat transfer pipeline such that a rupture location in the heat transfer pipe can be accurately identified in X and Y coordinates. The heat map (or an aerial picture or a digital map) can show one complete heat distribution by merging images including coordinates. In the embodiment of the present invention, it is possible to manage a bust position in time series by layering a heat map on a heat transfer pipe in a GIS system and can derive clear analysis data of comparison with a normal-state heat map.

FIG. 8 is a configuration view of a ground control system according to an embodiment of the present invention.

The ground control system 800 may include a communication unit 801, a monitoring unit 803, a storage unit 805, and a controller 807, and can control the drone 110.

The communication unit 801 can communicate with the drone 110 through LTE communication or 5th Generation (5G) communication, and can receive the information on a rupture position in a heat transfer pipeline from the drone 110.

The monitoring unit 803 can monitor the operation of the drone in real time.

The storage unit 805 can store the monitoring result by the monitoring unit 803.

The controller 807 can control the communication unit 801, the monitoring unit 803, and the storage unit 805.

An embodiment of the present invention may be implemented as a module or a device that can perform the methods or functions described above. In this case, the module may be implemented as a component of software and/or hardware. Further, according to an embodiment of the present invention, the methods or functions described above can be implemented as codes that can be read by a process on a medium in which a program is recorded. A processor-readable medium, for example, may be a ROM, a RAM, a CD-ROM, a magnetic tape, a floppy disk, and an optical data storage device, and includes a carrier wave (for example, transmission through the internet).

The protective range of the present invention should be construed by the following claims, and the scope of the present invention should be construed as being included in the patent right of the present invention.

## Claims

1. A system for inspecting the stability of a heat transfer pipe using a drone (110), the system comprising:
the drone (110) including a Global Positioning System (GPS) module (705) and a thermal imaging camera generating a heat map by capturing images of the heat transfer pipe; and a control unit receiving the information on a rupture location in the heat transfer pipe from the drone (110), identifying the rupture location in the heat transfer pipe, and controlling the flight of the drone (110),
wherein the drone (110) is configured to load the heat map onto a Geographic Information System (GIS), to compare the heat map with an initial heat transfer pipe, and to generate and transmit the information on the rupture location in the heat transfer pipe when the heat map does not match the initial heat transfer pipe.

2. The system of claim 1, wherein the heat map shows one complete heat distribution by merging each of images including X and Y coordinates.

3. The system of claim 1, wherein the drone (110) is configured to identify the information on the rupture position in the heat transfer pipe in X and Y coordinates by loading the heat map onto the GIS system.

4. The system of claim 1, further comprising a plurality of terminals receiving the information on the rupture location in the heat transfer pipe from the control unit through wireless communication.

5. The system of claim 1, wherein the initial heat transfer pipe is stored in advance in a storage unit.

6. A method for inspecting the stability of a heat transfer pipe using a drone (110), the method comprising the processes of:
generating and storing a heat map through a thermal imaging camera of the drone (110);
loading the heat map onto a Geographic Information System (GIS) by the drone (110);
comparing the heat map with an initial heat transfer pipe by the drone (110); and
generating and transmitting the information on the rupture location in the heat transfer pipe when the heat map does not match the initial heat transfer pipe by the drone (110).

7. The method of claim 6, wherein the heat map shows one complete heat distribution by merging each of images including X and Y coordinates.

8. The method of claim 6, wherein the drone (110) is configured to identify the information on the rupture location in the heat transfer pipe in X and Y coordinates by loading the heat map onto the GIS system.

9. The method of claim 6, further comprising a process of transmitting the information on the rupture location in the heat transfer pipe to the control unit through wireless communication.

10. The method of claim 6, wherein the initial heat transfer pipe is stored in advance in a storage unit.

11. A drone (110) for inspecting the stability of a heat transfer pipe, the drone (110) comprising:
a Global Positioning System (GPS) module (705) generating the position information of the drone (110);
a controller (709) performing control to generate and store a heat map through a thermal imaging camera, load the heat map onto a Geographic Information System (GIS), compare the heat map with an initial heat transfer pipe, and generate the information on the rupture location in the heat transfer pipe when the heat map does not match the initial heat transfer pipe; and
a communication unit (701) transmitting the information on the rupture position in the heat transfer pipe.

12. The drone (110) of claim 11, wherein the heat map shows one complete heat distribution by merging each of images including X and Y coordinates.

13. The drone (110) of claim 11, wherein the controller (709) is configured to identify the information on the rupture position in the heat transfer pipe in X and Y coordinates by loading the heat map onto the GIS system.

14. The drone (110) of claim 11, wherein the controller (709) performs control to transmit the information on the rupture location in the heat transfer pipe to a control unit through wireless communication.

15. The drone (110) of claim 11, wherein the initial heat transfer pipe is stored in advance in a storage unit.

## Patentansprüche

1. System zum Inspizieren der Stabilität einer Wärmeübertragungsleitung unter Verwendung einer Drohne (110), wobei das System Folgendes umfasst:
die Drohne (110), die ein Modul (705) des globalen Positionierungssystems (GPS-Modul) und eine Wärmebildkamera, die durch Aufnehmen von Bildern der Wärmeübertragungsleitung ein Wärmekennfeld erstellt, enthält; und eine Steuereinheit, die die Informationen über einen Ort eines Risses in der Wärmeübertragungsleitung von der Drohne (110) empfängt, den Ort eines Risses in der Wärmeübertragungsleitung identifiziert und den Flug der Drohne (110) steuert,
wobei die Drohne (110) konfiguriert ist, das Wärmekennfeld auf ein geografisches Informationssystem (GIS) hochzuladen, um das Wärmekennfeld mit einer ursprünglichen Wärmeübertragungsleitung zu vergleichen und die Informationen über den Ort eines Risses in der Wärmeübertragungsleitung zu erzeugen und zu übertragen, wenn das Wärmekennfeld nicht mit der ursprünglichen Wärmeübertragungsleitung übereinstimmt.

2. System nach Anspruch 1, wobei das Wärmekennfeld eine vollständige Wärmeverteilung zeigt, indem die Bilder, die X- und Y-Koordinaten enthalten, jeweils zusammengeführt werden.

3. System nach Anspruch 1, wobei die Drohne (110) konfiguriert ist, die Informationen über den Ort eines Risses in der Wärmeübertragungsleitung durch Hochladen des Wärmekennfeldes auf das GIS-System in X- und Y-Koordinaten zu identifizieren.

4. System nach Anspruch 1, das ferner mehrere Endgeräte umfasst, die die Informationen über den Ort eines Risses in der Wärmeübertragungsleitung durch Drahtloskommunikation von der Steuereinheit empfangen.

5. System nach Anspruch 1, wobei die ursprüngliche Wärmeübertragungsleitung vorab in einer Speichereinheit gespeichert wird.

6. Verfahren zum Inspizieren der Stabilität einer Wärmeübertragungsleitung unter Verwendung einer Drohne (110), wobei das Verfahren die folgenden Vorgänge umfasst:
Erzeugen und Speichern eines Wärmekennfeldes durch eine Wärmebildkamera der Drohne (110);
Hochladen des Wärmekennfeldes auf ein geografisches Informationssystem (GIS) durch die Drohne (110);
Vergleichen des Wärmekennfeldes mit einer ursprünglichen Wärmeübertragungsleitung durch die Drohne (110); und
Erzeugen und Übertragen der Informationen über den Ort eines Risses in der Wärmeübertragungsleitung, wenn das Wärmekennfeld nicht mit der ursprünglichen Wärmeübertragungsleitung übereinstimmt, durch die Drohne (110).

7. Verfahren nach Anspruch 6, wobei das Wärmekennfeld eine vollständige Wärmeverteilung zeigt, indem die Bilder, die X- und Y-Koordinaten enthalten, jeweils zusammengeführt werden.

8. Verfahren nach Anspruch 6, wobei die Drohne (110) konfiguriert ist, die Informationen über den Ort eines Risses in der Wärmeübertragungsleitung durch Hochladen des Wärmekennfeldes auf das GIS-System in X- und Y-Koordinaten zu identifizieren.

9. Verfahren nach Anspruch 6, das einen Vorgang des Übertragens der Informationen über den Ort eines Risses in der Wärmeübertragungsleitung durch Drahtloskommunikation an die Steuereinheit umfasst.

10. Verfahren nach Anspruch 6, wobei die ursprüngliche Wärmeübertragungsleitung vorab in einer Speichereinheit gespeichert wird.

11. Drohne (110) zum Inspizieren der Stabilität einer Wärmeübertragungsleitung, wobei die Drohne (110) Folgendes umfasst:
ein Modul (705) des globalen Positionierungssystems (GPS-Modul), das die Positionsinformationen der Drohne (110) erzeugt;
eine Steuereinrichtung (709), die eine Steuerung durchführt, um durch eine Wärmebildkamera ein Wärmekennfeld zu erzeugen und zu speichern, das Wärmekennfeld auf ein geografisches Informationssystem (GIS) hochzuladen, das Wärmekennfeld mit einer ursprünglichen Wärmeübertragungsleitung zu vergleichen und die Informationen über den Ort eines Risses in der Wärmeübertragungsleitung zu erzeugen, wenn das Wärmekennfeld nicht mit der ursprünglichen Wärmeübertragungsleitung übereinstimmt; und
eine Kommunikationseinheit (701), die die Informationen über die Position eines Risses in der Wärmeübertragungsleitung überträgt.

12. Drohne (110) nach Anspruch 11, wobei das Wärmekennfeld eine vollständige Wärmeverteilung zeigt, indem die Bilder, die X- und Y-Koordinaten enthalten, jeweils zusammengeführt werden.

13. Drohne (110) nach Anspruch 11, wobei die Steuereinrichtung (709) konfiguriert ist, die Informationen über den Ort eines Risses in der Wärmeübertragungsleitung durch Hochladen des Wärmekennfeldes auf das GIS-System in X- und Y-Koordinaten zu identifizieren.

14. Drohne (110) nach Anspruch 11, wobei die Steuereinrichtung (709) eine Steuerung durchführt, um die Informationen über den Ort eines Risses in der Wärmeübertragungsleitung durch Drahtloskommunikation an eine Steuereinheit zu übertragen.

15. Drohne (110) nach Anspruch 11, wobei die ursprüngliche Wärmeübertragungsleitung vorab in einer Speichereinheit gespeichert wird.

## Revendications

1. Système destiné à contrôler la stabilité d'un tuyau de transfert de chaleur en utilisant un drone (110), le système comportant :
le drone (110) incluant un module du système de positionnement mondial (GPS) (705) et une caméra d'imagerie thermique générant une carte thermique en capturant des images du tuyau de transfert de chaleur ; et une unité de commande recevant les informations sur un emplacement de rupture dans le tuyau de transfert de chaleur à partir du drone (110), identifiant l'emplacement de rupture dans le tuyau de transfert de chaleur, et commandant le vol du drone (110),
dans lequel le drone (110) est configuré pour charger la carte thermique sur un système d'information géographique (GIS), pour comparer la carte thermique avec un tuyau de transfert thermique initial, et pour générer et transmettre les informations sur l'emplacement de rupture dans le tuyau de transfert thermique lorsque la carte thermique ne correspond pas au tuyau de transfert thermique initial.

2. Système selon la revendication 1, dans lequel la carte thermique montre une distribution complète de la chaleur en fusionnant chacune des images incluant des coordonnées X et Y.

3. Système selon la revendication 1, dans lequel le drone (110) est configuré pour identifier les informations sur l'emplacement de rupture dans le tuyau de transfert de chaleur en coordonnées X et Y en chargeant la carte thermique sur le système GIS.

4. Système selon la revendication 1, comportant en outre une pluralité de terminaux recevant les informations sur l'emplacement de rupture dans le tuyau de transfert de chaleur à partir de l'unité de commande via une communication sans fil.

5. Système selon la revendication 1, dans lequel le tuyau de transfert de chaleur initial est stocké à l'avance dans une unité de stockage.

6. Procédé destiné à contrôler la stabilité d'un tuyau de transfert de chaleur en utilisant un drone (110), le procédé comportant les processus consistant à :
générer et stocker une carte thermique par l'intermédiaire d'une caméra d'imagerie thermique du drone (110) ;
charger, par le drone (110), la carte thermique sur un système d'information géographique (SIG) ;
comparer, par le drone (110), la carte thermique avec un tuyau de transfert thermique initial ; et
générer et transmettre, par le drone (110), les informations sur l'emplacement de rupture dans le tuyau de transfert de chaleur lorsque la carte thermique ne correspond pas au tuyau de transfert de chaleur initial.

7. Procédé selon la revendication 6, dans lequel la carte thermique montre une distribution complète de la chaleur en fusionnant chacune des images incluant des coordonnées X et Y.

8. Procédé selon la revendication 6, dans lequel le drone (110) est configuré pour identifier les informations sur l'emplacement de rupture dans le tuyau de transfert de chaleur en coordonnées X et Y en chargeant la carte thermique sur le système GIS.

9. Procédé selon la revendication 6, comportant en outre un processus consistant à transmettre les informations sur l'emplacement de rupture dans le tuyau de transfert de chaleur à l'unité de commande via une communication sans fil.

10. Procédé selon la revendication 6, dans lequel le tuyau de transfert de chaleur initial est stocké à l'avance dans une unité de stockage.

11. Drone (110) destiné à contrôler la stabilité d'un tuyau de transfert de chaleur, le drone (110) comportant :
un module du système de positionnement mondial (GPS) (705) générant les informations de position du drone (110) ;
une commande (709) réalisant une commande pour générer et stocker une carte thermique par l'intermédiaire d'une caméra d'imagerie thermique, charger la carte thermique sur un système d'information géographique (GIS), comparer la carte thermique avec un tuyau de transfert thermique initial, et générer les informations sur l'emplacement de rupture dans le tuyau de transfert thermique lorsque la carte thermique ne correspond pas au tuyau de transfert thermique initial ; et
une unité de communication (701) transmettant les informations sur l'emplacement de rupture dans le tuyau de transfert de chaleur.

12. Drone (110) selon la revendication 11, dans lequel la carte thermique montre une distribution complète de la chaleur en fusionnant chacune des images incluant des coordonnées X et Y.

13. Drone (110) selon la revendication 11, dans lequel la commande (709) est configurée pour identifier les informations sur l'emplacement de rupture dans le tuyau de transfert de chaleur en coordonnées X et Y en chargeant la carte thermique sur le système GIS.

14. Drone (110) selon la revendication 11, dans lequel la commande (709) réalise une commande pour transmettre les informations sur l'emplacement de rupture dans le tuyau de transfert de chaleur à une unité de commande via une communication sans fil.

15. Drone (110) selon la revendication 11, dans lequel le tuyau de transfert de chaleur initial est stocké à l'avance dans une unité de stockage.
